(19) Europäisches Patentamt / European Patent Office / Office européen des brevets

(11) **EP 3 339 524 A1**

(12) **EUROPEAN PATENT APPLICATION**

(43) Date of publication:
**27.06.2018  Bulletin 2018/26**

(51) Int Cl.:
**E04B 1/10** *(2006.01)*          **E04B 1/82** *(2006.01)*
**F16B 5/02** *(2006.01)*

(21) Application number: **16206820.9**

(22) Date of filing: **23.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **WETENSCHAPPELIJK EN TECHNISCH CENTRUM VOOR HET BOUWBEDRIJF in het verkort: WTCB 1000 Brussel (BE)**

(72) Inventors:
• **Venstermans, Jan**
  **2560 Nijlen (BE)**
• **Ingelaere, Bart**
  **1490 Court St.-Etienne (BE)**

(74) Representative: **Gevers Patents Intellectual Property House Holidaystraat 5 1831 Diegem (BE)**

(54) **A BUILDING**

(57)    A building having at least one pair of levels with solid structural wooden side wall panels (2a, 2b), the first panels (2a) supporting the second panels (2b) and load bearing acoustically insulating elements which are arranged in load bearing zones distributed along the length of and between the panels (2a, 2b) thereby forming acoustically insulating gaps. The load bearing elements (10) have a vertical resonance frequency below 40 Hz under the permanent load of a part of the building supported by the load bearing elements (10) increased with a maximal utile load of 3.0 kN/m² of floor area present in the part of the building supported by the load bearing elements (10). Combining the reflection of the flanking sound waves at the location of the gaps with the damping of flanking sound waves by the load bearing elements (10) was found to provide an enhanced flanking sound insulation, in particular in the low frequency bands.

*F i g . 4a*

EP 3 339 524 A1

**Description**

The present invention relates to a building comprising at least one pair of levels which include a first level with solid structural wooden first side wall panels and a second level, on top of the first level, with solid structural wooden second side wall panels, the first panels being situated underneath the second panels and supporting said second panels; with a load bearing acoustical insulation being arranged between the first panels and the second panels, which load bearing acoustical insulation supports a part of the building which is situated on top of the load bearing acoustical insulation and which has a permanent load.

A known problem in such buildings is flanking sound transmission, i.e. non-direct sound transmission. This occurs because airborne sound waves induce numerous structural vibrations in walls and/or floors and/or ceilings in the emission room that can propagate towards walls and/or ceilings and/or floors in the reception room where they can be radiated again as airborne sound (see the EN 12354-1:2000 norm). This flanking sound transmission can, in certain instances, seriously diminish the overall sound insulation in the building. This effect is especially important in prior art constructions using massive wooden panels, such as Cross Laminated Timber (CLT) or similar wooden materials. In these prior art constructions, individual panels are rigidly fixed together. The increase in flanking transmission in such constructions is both due to their light weight, when compared to, for example, concrete constructions, and due to their more homogeneous character compared to other light-weight timber frame constructions.

In the art, several solutions to decrease flanking transmission in CLT constructions are known. A solution is the use of adequate linings of the wall panels, i.e. shielding at the emission side, the reception side or both sides. However, this shielding is expensive and moreover results in a loss of space.

Another solution is the use of elastic interlayers, i.e. load bearing acoustically insulating strips, between the wall panels and the floor slabs. Commercial systems using this technique apply a continuous elastic strip below and/or above the wall panels in their connection. The constructions are then further assembled by using small L-type connections to rigidly fix the wooden panels together.

While these constructions are known to provide a reasonable flanking sound insulation in the mid and high frequency bands, i.e. above 200 Hz, they do not provide a high enough flanking sound insulation in the low frequency bands, i.e. below 200 Hz. This is especially important as the overall experienced sound insulation is largely dominated by what happens below 250 Hz.

It is an aim of the present invention to provide a building comprising solid structural wooden side wall panels with an enhanced flanking sound insulation, in particular in these low frequency bands.

This aim is achieved according to the invention in that said load bearing acoustical insulation comprises load bearing acoustically insulating elements which are arranged in load bearing zones distributed along the length of the wall panels, which load bearing zones are located at least 1 m from one another in the longitudinal direction of said side wall panels thereby forming acoustically insulating gaps having a length of at least 1 m inbetween the load bearing zones between the first panels and the second panels, and in that said load bearing elements have a vertical resonance frequency below 40 Hz under said permanent load of said part of the building situated above the load bearing elements increased with a maximal utile load of 3.0 kN/m$^2$ of floor area of the levels present in said part of the building which is situated on top of said load bearing acoustical insulation.

At the location of the acoustically insulating gaps, the structural sound waves travelling in the first panels towards the second panels, or vice versa, are reflected due to the impedance jump between the wood and the air that occupies the gap. Moreover, when the load bearing elements have a vertical resonance frequency below 40 Hz under the permanent and the maximal utile load of 3.0 kN/m$^2$ in the building, i.e. under the load exerted by the part of the building that is supported by the respective load bearing element, the important acoustically induced bending and shear waves in the flanking sound propagation are also reduced. In accordance with the present invention it has been found that a more efficient damping of the bending and shear waves can be achieved when replacing the continuous acoustically damping strips of the prior art systems by a combination of acoustically damping gaps and local load bearing acoustic load bearing elements. Due to the higher pressures exerted by the load of the building onto the load bearing elements their dynamic modulus of elasticity will be quite high (i.e. more rigid) compared to the elastic continuous strips used in existing applications, but due to these high pressures the load bearing elements still achieve the low resonance frequency which is required in accordance with the present invention. Combining the reflection of the flanking sound waves at the location of the acoustically insulating gaps with the damping of flanking sound waves acting at the load bearing elements in the load bearing zones was found to provide an enhanced flanking sound insulation, in particular in the low frequency bands.

In the art it is known to connect wooden panels together to form a building, wherein the panels are separated by a gap. For example, EP-A-2687651 discloses such a connection system. The connection system comprises metal connecting elements at the corners of the solid wooden panels which are fixed by means of long screws to the wooden panels. The connecting elements project somewhat from the edges of the panels and are used to fix the panels to one another so that a gap may remain between the panels. US-A-2015/0198188 discloses a similar connection system of solid wooden panels. However, the gap is smaller as the connection systems are now fitted onto recessed corners of the slabs.

In contrast to the present invention, these connection systems do not provide a solution to the problem of the flanking sound transmission since the metal connecting elements rigidly fix the wooden panels together such that they form a single wall or floor of a building level. As such, flanking sound waves are easily transmitted between various panels.

In an embodiment, said pair of levels further comprises structural floor slabs supported by said first side wall panels. Preferably, said structural floor slabs are solid wooden floor slabs, in particular cross laminated timber floor slabs.

In this embodiment, the entire level of the building, i.e. the side wall panels and the floor slabs, are assembled together.

In a preferred embodiment, said floor slabs rest on top of the first side wall panels and support the second side wall panels, with said load bearing acoustical insulation being arranged inbetween said floor slabs and said first side wall panels or inbetween said floor slabs and said second side wall panels.

This allows for a degree of flexibility when designing the building, i.e. the floors can either form part of the lower floor or the upper floor which impacts the load exerted on the load bearing acoustical insulation.

In a further preferred embodiment, said acoustically insulating gaps have such a length and said load bearing elements such a low resonance frequency that a vibration reduction index between said first and second levels of the building is at least 10 dB higher, for each one-third octave band between 50 Hz and 200 Hz, than a further vibration reduction index obtained when the second panels are rigidly fixed to said floor slabs which are rigidly fixed to said the first panels, the vibration reduction index and the further vibration reduction index being measured in accordance with the ISO 10848-1:2006 standard.

In an embodiment, said wooden side wall panels are cross laminated timber panels.

In an embodiment, said gaps are at least 0.5 cm high, preferably at least 1 cm high and most preferably at least 2 cm high.

In an embodiment, said vertical resonance frequency of the load bearing elements is below 30 Hz.

In this embodiment, even lower frequency waves are also damped, which further enhances the sound insulation.

In an embodiment, said load bearing elements have a further vertical resonance frequency which is determined under said permanent load of said part of the building situated above the load bearing elements increased with a utile load which is equal to 1.0 kN/m$^2$ of floor area of the levels present in said part of the building which is situated on top of said load bearing acoustical insulation, which further vertical dilatational resonance frequency is below 30 Hz and preferably below 15 Hz.

In an embodiment, said load bearing elements have a shear modulus below 204*$d_1$*(PL+MUL/3) and below 408*$d_2$*(PL+MUL), where PL is said permanent load of the part of said building situated above the load bearing elements divided by a total supporting surface area of the load bearing elements, MUL is said maximal utile load of 3.0 kN/m$^2$ of floor area of the levels present in said part of the building which is situated on top of said load bearing acoustical insulation divided by a total supporting surface area of the load bearing elements, $d_1$ is a height of the load bearing elements under the load of PL+MUL/3, and $d_2$ is a height of the load bearing elements under the load of PL+MUL. In particular, MUL is calculated by taking the total floor area of all the above levels, e.g. 3 floors of 100 m$^2$ and one floor of 50 m$^2$ making 350 m$^2$ of floor area, multiplied by the MUL value of 3.0 kN/m$^2$, i.e 1050 kN divided by a total supporting surface area of the load bearing elements.

In an embodiment, the integrity of the load bearing elements under the combined loads of 1.35*PL and 1.5*MUL remains intact, where PL is said permanent load of the part of said building situated above the load bearing elements, MUL is said maximal utile load of 3.0 kN/m$^2$ of floor area present in said part of the building which is situated on top of said load bearing acoustical insulation.

In an embodiment, said load bearing elements have a Poisson ratio between 0.4 and 0.5.

In an embodiment, said load bearing elements, under said permanent load of said part of the building situated above the load bearing elements increased with the maximum utile load of 3.0 kN/m$^2$ of floor area present in said part of the building which is situated on top of said load bearing acoustical insulation, have a horizontal displacement less than one-third of their initial height and less than one-fifth of their initial width, where the initial height and the initial width of the load bearing elements are the maximum height and the maximum width of the those elements in their unloaded state.

In an embodiment, said load bearing elements have a creep compared to their initial height below 2 % and preferably below 1% per time decade expressed in minutes under the combined loads of 1.35*PL and 1.5*MUL remains intact, where PL is said permanent load of the part of said building situated above the load bearing elements, MUL is said maximal utile load of 3.0 kN/m$^2$ of floor area present in said part of the building which is situated on top of said load bearing acoustical insulation.

In an embodiment, said load bearing elements have a tensile strength higher than 5 MPa.

In an embodiment, the building comprises connection systems that fix the second panels to the first panels, which connection systems comprise first connection elements rigidly fixed to the first wall panels and second connection elements rigidly fixed to the second wall panels, the first and second connection elements being connected by at least one fixation component which assures a force resistant connection against horizontal forces on the first or second panels.

Preferably, the at least one fixation component comprises a bolt that engage the first or the second connection element through the intermediary of an elastic material which is applied around the bolt, the elastic material being in particular in the form of a washer.

As such, flanking sound waves that would travel between the panels via the bolts are also damped by the elastic material, which further improves the flanking sound insulation.

In an embodiment, said load bearing zones have a length that is smaller than 0.5 m and preferably smaller than 0.4 m.

The invention will be further explained by means of the following description and the appended figures.

Figure 1 shows a cross-sectional view of a building constructed from wooden levels that are connected using connection systems.
Figure 2 shows a perspective view of a part of the construction of Figure 1.
Figure 3 shows a part of Figure 2 in more detail.
Figure 4a shows the connection system of Figure 3 in more detail.
Figure 4b shows a side view of the building construction of Figure 1.
Figure 4c shows a frontal view of the building construction of Figure 1.
Figure 4d shows a top view of the connection system of Figure 4a.
Figure 5 shows a similar construction as Figure 2 but with alternative connection systems.
Figure 6 shows the alternative connection system from Figure 5 in more detail.
Figure 7 shows a cross-sectional of an alternative building construction using wooden levels with connection systems.
*Figure 8 shows a cross-sectional of another alternative building construction using wooden levels with connection systems.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the various embodiments, although referred to as "preferred" are to be construed as exemplary manners in which the invention may be implemented rather than as limiting the scope of the invention.

As used herein, the term "airborne sound insulation" refers to the insulation value measured in accordance with the ISO 16283-1:2014 standard. The measurement leads to a spectrum of $D_{nT}$-values for the different one-third octave bands between 50 Hz and 3150 Hz. Based on this spectrum of $D_{nT}$-values a single rating value can be calculated according to the ISO 717-1:2013 standard.

As used herein, the term "low frequency air sound insulation" refers to the insulation values for the frequency bands below 200 Hz (i.e. the one-third octave bands of 50 Hz, 63 Hz, 80 Hz, 100 Hz, 125 Hz and 160 Hz).

As used herein, the term "timber" refers to Cross Laminated Timber (CLT) or wooden materials having a similar density and homogeneity.

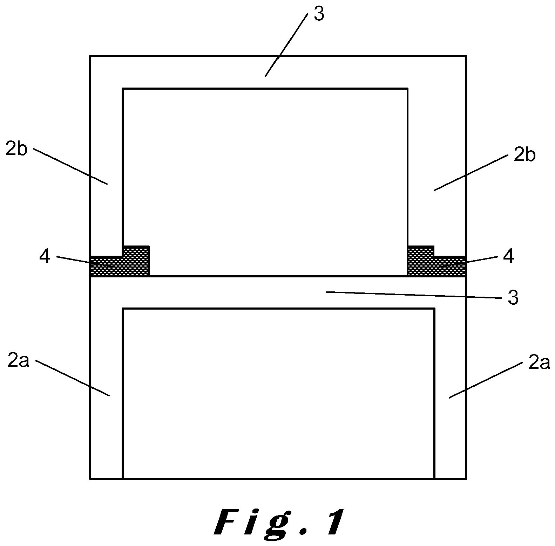

Figure 1 shows a schematic cross-sectional side view of a building that is constructed in the form of two wooden levels 1, i.e. two levels, which each have the shape of an inverted open box. The bottom wooden level 1 has four side walls 2a, of which only two are shown, and a top wall 3. The bottom wooden level 1 could be constructed on a level ground surface, e.g. a concrete foundation or on the construction of a lower level. On top of the bottom wooden level 1, a number of connection systems 4 are mounted. These connection systems 4 form the basis on which the side walls 2b of the top wooden level 1 are placed. As such, the top wall 3, i.e. the ceiling, of the bottom wooden level 1 also acts as the floor slab onto which the top wooden level 1 can be placed.

In Figure 1 only two wooden levels 1 are shown, but it will be appreciated that multiple wooden levels 1 can be erected on top of one another, by using the connection systems 4, to form large constructions, e.g. apartment buildings, office buildings, etc. also including the possible partition walls. As will be described below, the load bearing capacity of the connection systems 4 can vary depending on the height of the construction and on the position of the connection systems in the construction, i.e. on the load to bear. In particular, as will be described below, the connection system 4 has to be adapted in function of the height and thus the load on it. It will also be appreciated that the load may vary depending on the presence of windows, stairways, furniture, occupancy, etc.

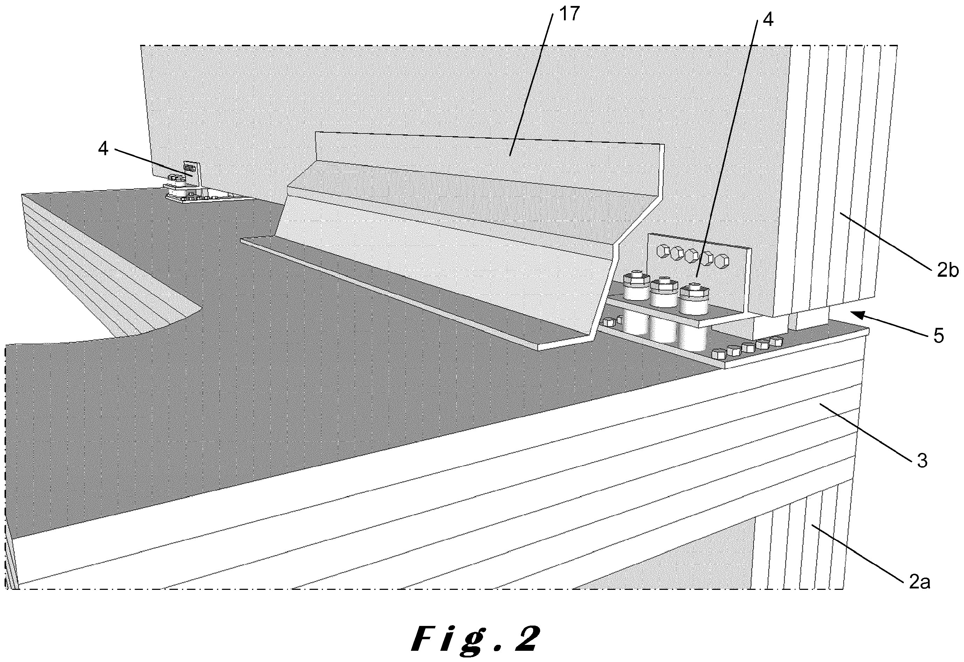

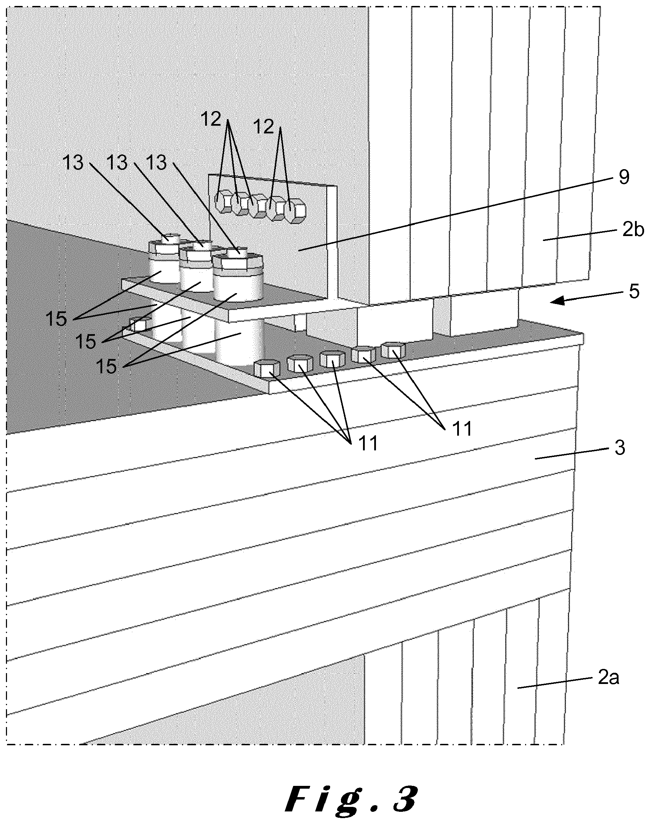

Figure 2 shows a perspective view of a part of the construction of Figure 1. In this case the upper side wall 2b is supported on the lower wooden level 1 by two connection systems 4. The connection systems 4 ensure that a gap 5 is present between the wooden levels 1. The gap 5 is also clearly shown in Figure 3 which shows a part of Figure 2 in more detail. This gap 5 reduces the acoustically induced bending and shear waves in the flanking sound propagation between the wooden levels 1. In particular, this reduction is most apparent in the low and very low frequency free bending waves with frequencies below 200 Hz.

It is advantageous not to fill up the gap 5. However, if for some reason, one wishes to do so (e.g. to avoid construction rubble to fill up the intended gap 5 during the construction phase), then only materials should be used that will preserve the impedance jump caused by the gap 5. This ensures that all types of waves are reflected and not transmitted between the wooden levels 1. For example, a low density < 20 kg/m$^3$ rock wool could be used to fill up the gap 5 without affecting the flanking sound insulation properties.

In the building shown in Figure 1, the fire protection and the air tightness can be provided by a floating floor construction and airtightness foils 17 as shown in Figure 2.

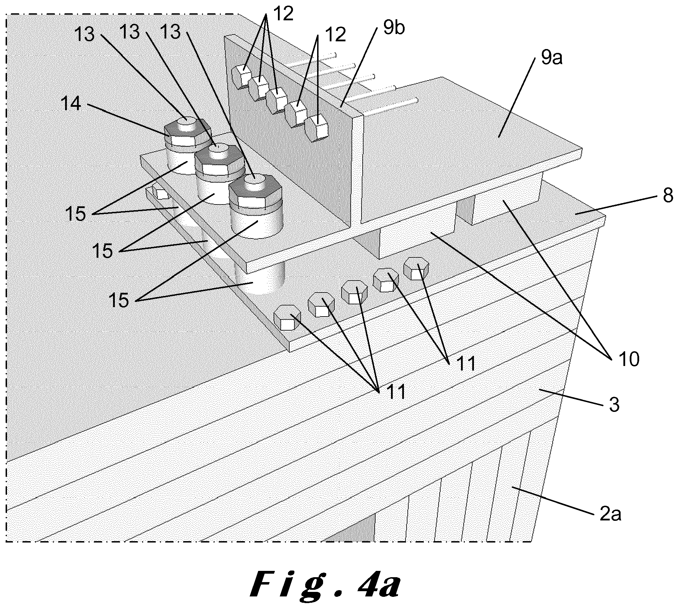

Figures 3 and 4a detail the connection systems 4 shown in Figures 1 and 2. Specifically, each connection system 4 has two connection elements 8, 9, each of the elements 8, 9 being connected to one of the wooden levels 1. For the top wooden level 1, the connection element 9 comprises a substantially flat horizontal part 9a and a substantially flat vertical part 9b. For the bottom wooden level 1, the connection element 8 comprises only a substantially flat horizontal part.

In an embodiment, the connection elements 8, 9 are formed by metal, but other stiff materials can also be used, such as carbon fiber materials, composite materials, etc.

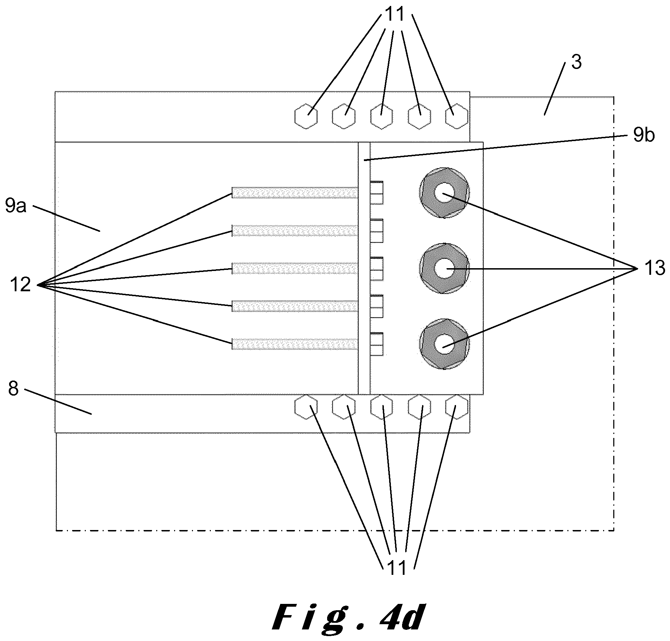

The first connection element 8 is attached to the bottom wooden level 1 using screws 11 that are screwed through holes in the substantially flat horizontal part of the first connection element 8 into the timber. Similarly, the second connection system 9 is attached to the top wooden level 1 using screws 12 which are screwed through holes into the timber in the substantially flat vertical part 9b of the second connection element 9 (as also detailed in Figure 4d).

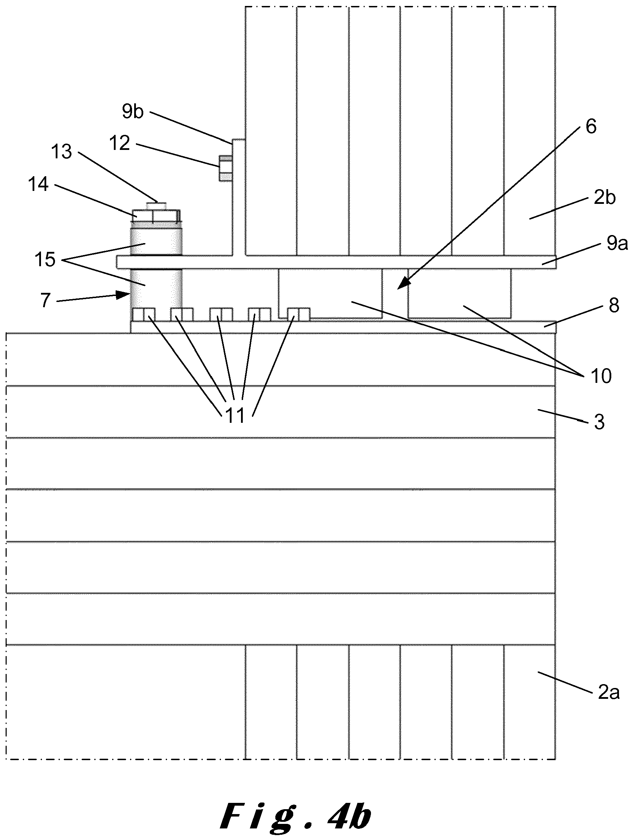

Each connection system 4 further comprises one or more acoustically insulating load bearing elements 10 and an acoustically damped fixation component 7 (indicated in Figure 4b). Both the load bearing element 10 and the fixation component 7 are located between the first connection element 8 and the second connection element 9. The load bearing elements 10 are intended to transmit vertical forces between the wooden levels 1 whilst the fixation components 7 are intended to transmit horizontal forces between the wooden levels 1.

The load bearing elements 10 of each connection system 4 form a load bearing zone 6 in the longitudinal direction of the wall panel that is supported by the connection system 4. The load bearing zones 6 are separated form one another by the gaps 5. The total length of the load bearing zones 6 formed by the load bearing elements 10 is preferably smaller than 0.5 m and, more preferably, smaller than 0.4 m. With such a length the different load bearing elements 10 are considered as being situated in a same load bearing zone 10.

The load bearing elements 10 are acoustically insulating and have a dynamic stiffness, a load-bearing capacity and a creep which is determined in accordance with the load they have to support as described below. The load bearing elements 10 preferably comprise a visco-elastic material, but other materials can also be used, e.g. elastic materials, elastomers, wooden materials, composite materials, rubber with cork embedded therein, etc.

In the embodiment illustrated in the drawings, each connection system 4 comprises four load bearing acoustically insulating elements 10. Alternatively, each connection system 4 may comprise less or more load bearing elements 10. The number of load bearing elements 10 needed per connection system 4 depends on the load to bear and the technical characteristics of the load bearing elements 10. When the load is high, more than one, in particular more than two, load bearing elements 10 may be necessary per connection system, i.e. per load bearing zone 6. It is further advantageous to use more smaller load bearing elements 10 as opposed to one large load bearing element 10, as smaller load bearing elements 10 can more easily reduce the flanking sound waves transmissions.

In an embodiment, the gap 5 between the top wooden level and the bottom wooden level is at least 0.5 cm high, preferably 1 cm high and most preferably at least 2 cm high. In case the load bearing elements 10 are too high compared to the height of the gap 5, the connection systems 4 can be recessed in the wall panels 2b or in the floor slab 3.

In an embodiment, the distance between two adjacent load bearing zones 6, measured in the longitudinal direction of the wall panels, i.e. the length of the gap or gaps inbetween the load bearing zones 6 underneath (or above) a wall panel, is at least 1 m, more preferably at least 2 m and most preferably at least 3 m.

To avoid damaging the wooden levels 1, each load bearing element 10 is placed between the substantially flat horizontal parts of the connection elements 8, 9. As such, the connection elements 8, 9 have a larger contact surface area with the wooden levels 1 thus avoiding high pressures on the wooden levels that could damage, e.g. wooden fibers, in the levels. Since the weight of the building has to be carried by the load bearing elements 10, and since relatively wide gaps 5 have to be provided inbetween the load bearing zones 6, quite large pressures may be exerted on the load bearing elements 10, for example pressures exceeding 2.0 N/mm$^2$.

Both connection elements 8, 9 are connected to one another using a fixation component 7 comprising three connections each having a combination of elastic material 15 and bolts 13. In Figures 3 to 4d there are shown three individual connections which together form the fixation component 7 (see Figure 4b). It will be appreciated that more or less connections could be used depending on the amount of horizontal forces expected on the building, e.g. higher buildings will experience more wind-generated horizontals forces as compared to lower buildings. The connections realize a vibration damping while assuring a force resistant connection between the connection elements 8, 9. In the embodiment shown in Figures 4a to 4d, the connections are located between the substantially flat horizontal part 9a of the second connection elements 9 and the substantially flat horizontal part of the first connection system 8. It will be appreciated that in other embodiments, more or less connections may be provided depending on the building.

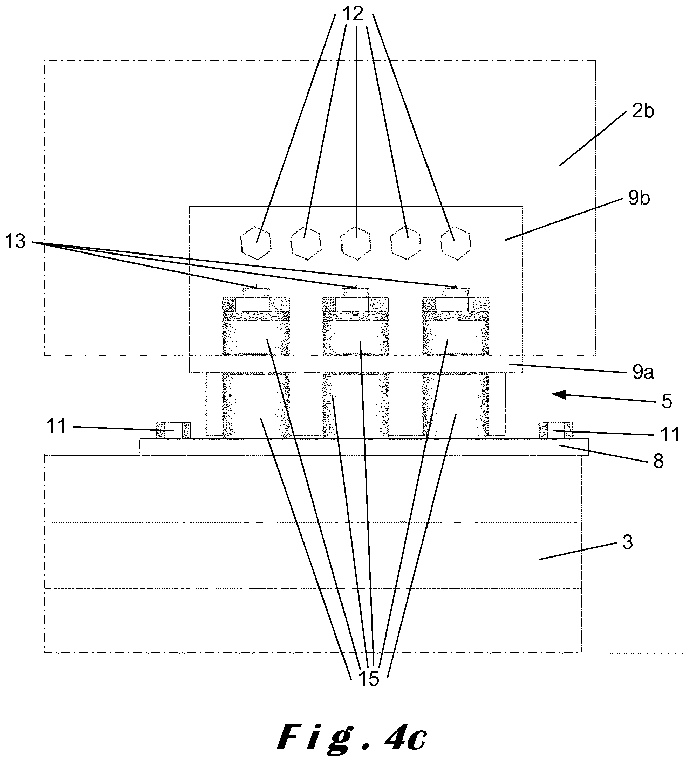

Each connection comprises a bolt 13 embedded in an elastic material 15 (shown in Figure 4c). The bolt 13 provides a resistance to the building against horizontal forces (both during and after construction), such that the top wooden construction 1 cannot slide on the connection systems 4, while the elastic material 15 reduces vibration transmission between the connection elements 8, 9 that could occur via the bolts 13.

Specifically, each connection is designed to avoid direct contact between metal elements, as this would create a transmission path for flanking sound waves which could negatively impact the sound insulation. To achieve this the bolt 13 is preferably welded to the substantially horizontal part of the first connection element 8 and the elastic material 15 is a hollow cylinder that is placed around the bolt 13 and fits into a hole in the substantially horizontal part of the second connection element 9. The elastic material 15 is secured on the bolt 13 by a nut 14 that is screwed onto a threaded portion of the bolt 13. In the embodiment illustrated in Figures 3 to 4c a metallic washer is also applied between the nut 14 and the elastic material 15.

Separate washer made of an elastic material, for example of the same material as used for the load bearing elements 10, can further be applied around the bolts 13 between the metallic washer and the flat horizontal part 9a of the second connection element 9 and between the flat horizontal part 9a and the flat horizontal part of the first connection element 8.

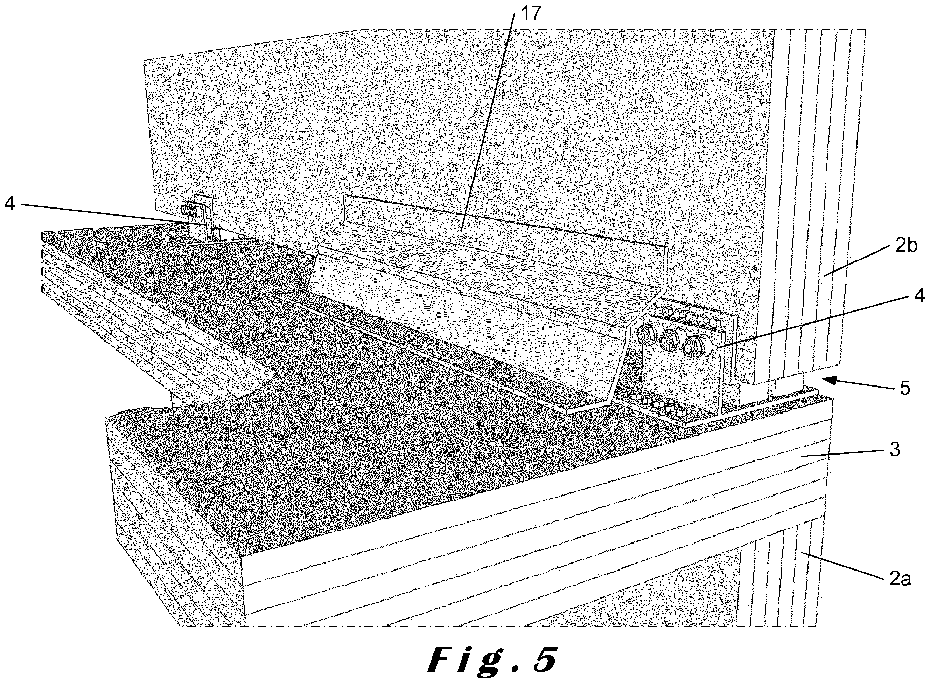

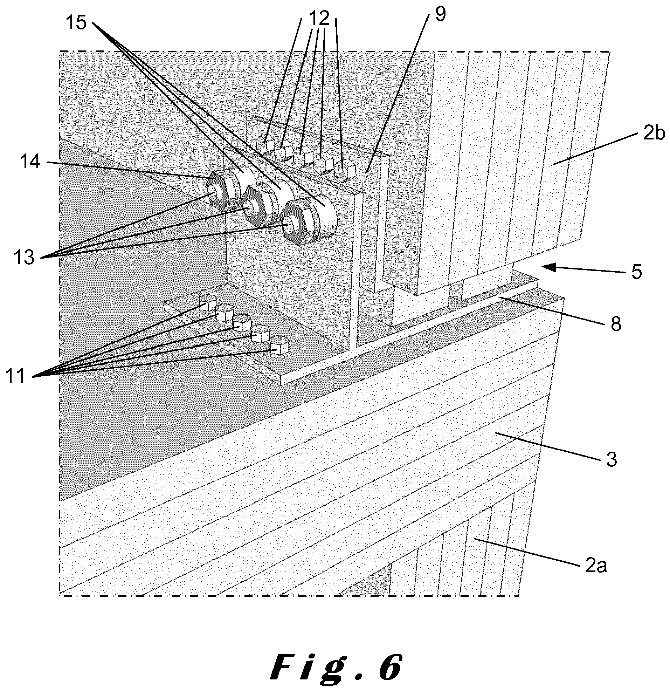

In an alternative embodiment, shown in Figures 5 and 6, the fixation component 7 is located between the substantially flat vertical part 9b of the second connection element 9 and a substantially flat vertical part 8b of the second connection element 8. In this alternative embodiment, each bolt 13 is preferably welded to the substantially vertical part 9b of the second connection element 9 and the elastic material 15 is again a hollow cylinder that is placed around the bolt 13 and fits into a hole in the substantially vertical part 8b of the first connection element 8. The elastic material 15 is secured on the bolt 13 by a nut 14 that is screwed onto a threaded portion of the bolt 13. A washer is also applied between the nut 14 and the elastic material 15.

The aim of the load-bearing zones 6 is to transfer vertical forces through the connection system 4, thereby transferring the vertical forces between different wooden levels 1. As such, each load bearing element 10 will need to support its part of the maximal total load of all the levels above it, i.e. of all the levels that are loaded onto the load bearing element 10. This total load is expressed in kg per $m^2$ of the supporting surface of the load bearing elements 10. Specifically, if eight connections systems 4 are used to support the top level of a two-story building (as illustrated in Figure 1) with each connection system 4 having four load bearing elements 10, the total load of the top level is averaged over the 32 different load bearing elements which have a combined supporting surface.

The total load is constituted by two components, namely PL and MUL. The component PL, expressed in kg, represents the total construction load of the levels above and supported by a specific load bearing element 10, specifically all fixed structural elements are taken into account when determining the permanent load, such as walls, partitions, stairways, baths, toilets, etc. In practice, the elements contributing to the permanent load are determined in accordance with the EN 1991-1-1 (2002) norm, in particular with section 3.2 of the EN 1991-1-1 (2002) norm. The component MUL, expressed in kg, represents the maximal useful load (i.e. the maximal mobile load, defined in section 3.3 of the norm EN 1991-1-1 (2002) in function of the type of building on each floor composed of furniture, the weight of persons, etc.) of all the floors above and supported by the load bearing element 10. As a consequence, PL and MUL vary at each level of the building (decreasing when there are less levels on top of the load bearing element), resulting in different physical characteristics for the load bearing elements 10 for different floor levels.

Due to the properties of the load bearing elements 10, the connection systems 4 have a vertical resonance frequency below 40 Hz and more preferably below 30 Hz under the permanent load due to the part of the building which is situated on top of the load bearing elements 10 in combination with a selected useful load of 3.0 kN/$m^2$ of floor area present in the part of the building which is situated on top of said load bearing elements 10. The floor area refers to the maximal area of floor possible on a level, the area of the outer walls and the partition walls not included, i.e. taking the inner dimensions of the supported levels and determining the maximal floor area (including any open halls which have no floor but comprise for example the stairs). It will be readily appreciated that the floor area can vary for different levels, e.g. an attic level in a residential building may have a smaller floor area as compared to the ground level.

The resonance frequency takes into account the real building loads that are exerted onto the connection systems 4. Specifically, the vertical resonance frequency, $f_r$, is determined from equation (1):

$$f_r \cong \frac{1}{2\pi}\sqrt{\frac{s}{m''}} \qquad\qquad (1)$$

where s is the dynamic stiffness expressed in N/m$^3$, and m'' indicates the total load per supporting surface of the load bearing elements 10 in the load bearing zones 6 [kg/m$^2$], i.e. the sum of the permanent load and the selected useful load on the load bearing elements 10, i.e. a selected value of the maximal useful load per level of any one 3 kN/m$^2$, 2kN/m$^2$ and 1 kN/m$^2$ of maximal floor area of the levels.

In a preferred embodiment, the connection systems 4 have a vertical resonance frequency below 30 Hz and preferably below 15 Hz under the permanent load due to the part of the building which is situated on top of the load bearing elements 10 in combination with a selected useful load of 1.0 kN/m$^2$ of floor area present in the part of the building which is situated on top of said load bearing elements 10.

Preferably, the decrease in height of the load bearing elements 10 due to the permanent load is below 20% and preferably below 10% of the initial height of the load bearing elements 10, i.e. before a load was exerted onto the load bearing elements 10. After having initially placed the permanent load on the load bearing elements 10, the creep, i.e. the further decrease in height, of the load bearing elements 10 due to long-term exposure to the permanent load and the selected maximal useful load should preferably be, per decade of time (i.e. 1 minute, 10 minutes, 100 minutes, 1000 minutes, etc.), less than 2% and more preferably less than 1%. Moreover, the horizontal displacement of the load bearing elements 10 under the permanent load and the selected maximal useful load should preferably be less than one-third of their initial height and less than one-fifth of their initial width. Furthermore, the tensile strength of the load bearing elements 10 is preferably at least 5 MPa with a Poisson coefficient between 0,4 and 0,5. The shear modulus G of the load bearing elements 10 per unit area thereof is preferably below $204*d_1*(PL+MUL/3)$ and below $408*d_2*(PL+MUL)$, where PL is said permanent load of the part of said building situated above the load bearing elements divided by a total supporting surface area of the load bearing elements, MUL is said maximal utile load of 3.0 kN/m$^2$ of floor area of the levels present in said part of the building which is situated on top of said load bearing acoustical insulation divided by a total supporting surface area of the load bearing elements, $d_1$ is a height of the load bearing elements under the load of PL+MUL/3, and $d_2$ is a height of the load bearing elements under the load of PL+MUL. Finally, the integrity of the load bearing elements 10 under the combined loads of 1.35*PL and 1.5*MUL should preferably remain intact.

Furthermore, the increase of the vibration reduction index, denoted by $\Delta k_{2b2a}$ and $\Delta k_{2b3}$, via the connection systems 4 is at least 10 dB for each frequency band from 50 Hz onwards for the transmission paths "2b2a" from the top side wall 2b to the bottom side wall 2a and "2b3" from the top side wall 2b to the top wall 3. Both $\Delta k_{2b2a}$ and $\Delta k_{2b3}$ are determined from measurements according to the ISO 10848-1:2006 standard on a T-junction (i.e. on a junction such as detailed in Figure 3) as detailed, in particular, in paragraph 7.2 of the ISO 10848-1:2006 standard for structure-born excitation. To obtain increase of the vibration reduction index, first, the vibration reduction index $k_{ij}$ is measured in rigidly connected wooden panels and, second, the vibration reduction index $k'_{ij}$ is measured in the T-junction using the connection systems 4. The difference between both values is $\Delta k_{ij} = k'_{ij} - k_{ij}$.

Due to these constraints the connection systems 4 allow the top side walls 2b to be connected with the bottom wooden level 1 in such a way that all forces and moments are dominantly transmitted via the connection systems 4. The connection systems 4 do not specifically aim to reduce the traditional vibration transmissions, which are dominantly composed of longitudinal waves (i.e. vertical dynamic forces acting on the connection systems 4). Rather, the connection systems 4 reduce acoustically induced bending and shear waves in the flanking sound transmission between the wooden levels 1. In particular, the low and very low frequency bending waves and free waves transmissions with frequencies below 200 Hz and 50 Hz respectively are attenuated. The attenuation is due to an impedance jump caused by the connection systems 4 which results in a reflection of the bending and shear waves.

Furthermore, it will be appreciated that, although the connection system 4 has been illustrated as a single device, it can also be split into multiple devices. For example, the load-bearing zones 6 could be located between a first set of two plates to support the top side walls 2b, while the fixation components 7 may be located between a second set of two plates, which second set is not attached to the first set of two plates.

In a preferred embodiment, the air tightness of the construction is assured by using typical air tightness foils 17 connecting the upper side wall 2b and the floor, i.e. the top wall 3 of the lower wooden level 1 as shown in Figures 2 and 5. Advantageously, if the exterior side of the wooden levels 1 (where the connection systems 4 are almost not visible) is easily accessible, then the air tightness foil may be applied on the exterior side. Alternatively, if the exterior side is not easily accessible, the air tightness foil needs to be applied on the interior side. This could be done by enveloping the connection systems 4.

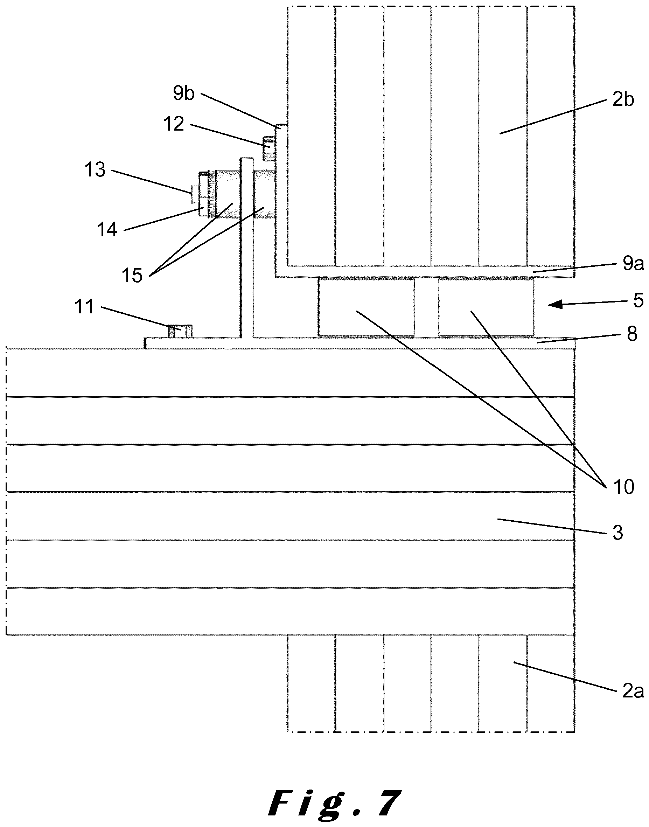

Figure 7 shows an alternative construction using wooden levels 1 with connection systems 4. The main difference is that the wooden levels 1 are now inverted. As such, the connection systems 4 are mounted on top of the bottom side walls 2a and are also attached to the bottom of the floor 3 of the top wooden level 1 thereby supporting both the floor 3 and the top side walls 2b.

Figure 8 shows another alternative construction. The construction comprises two bottom side walls 2a, two top side walls 2b and a floor slab 3. The two bottom side walls 2a are mounted on the ground and are used for supporting the connection systems 4. The connection systems 4 are also directly attached to the floor panel 3 and thus support both the floor panel 3 and the two top side walls 2b. The floor panel 3 is coupled to the two top side walls 2b using two connection systems 4. It will be appreciated that that the top connection systems 4 and the bottom connection systems 4 can include different load-bearing zones 6 and different fixation components 7. Alternatively, the the top connection systems 4 and the bottom connection systems 4 are the same.

Although aspects of the present disclosure have been described with respect to specific embodiments, it will be readily appreciated that these aspects may be implemented in other forms.

**Claims**

1. A building comprising at least one pair of levels which include a first level with solid structural wooden first side wall panels (2a) and a second level, on top of the first level, with solid structural wooden second side wall panels (2b), the first panels (2a) being situated underneath the second panels (2b) and supporting said second panels (2b); with a load bearing acoustical insulation being arranged between the first panels (2a) and the second panels (2b), which load bearing acoustical insulation supports a part of the building which is situated on top of the load bearing acoustical insulation and which has a permanent load,

   **characterized in that** said load bearing acoustical insulation comprises load bearing acoustically insulating elements (10) which are arranged in load bearing zones (6) distributed along the length of the wall panels (2a; 2b), which load bearing zones (6) are located at least 1 m from one another in the longitudinal direction of said side wall panels thereby forming acoustically insulating gaps (5) having a length of at least 1 m inbetween the load bearing zones (6) between the first panels (2a) and the second panels (2b), and

   **in that** said load bearing elements (10) have a vertical resonance frequency below 40 Hz under said permanent load of said part of the building situated above the load bearing elements (10) increased with a maximal utile load of 3.0 kN/m$^2$ of floor area of the levels present in said part of the building which is situated on top of said load bearing acoustical insulation.

2. A building according to claim 1, **characterized in that** said pair of levels further comprises structural floor slabs (3) supported by said first side wall panels (2a).

3. A building according to claim 2, **characterized in that** said structural floor slabs (3) are solid wooden floor slabs, in particular cross laminated timber floor slabs.

4. A building according to claim 2 or 3, **characterized in that** said floor slabs (3) rest on top of the first side wall panels (2a) and support the second side wall panels (2b), with said load bearing acoustical insulation being arranged inbetween said floor slabs (3) and said first side wall panels (2a) or inbetween said floor slabs (3) and said second side wall panels (2b).

5. A building according to any one of the claims 2 to 4, characterized said acoustically insulating gaps (5) have such a length and said load bearing elements (10) such a low resonance frequency that a vibration reduction index between said first and second levels of the building is at least 10 dB higher, for each one-third octave band between 50 Hz and 200 Hz, than a further vibration reduction index obtained when the second panels (2b) are rigidly fixed to said floor slabs (3) which are rigidly fixed to said the first panels (2a), the vibration reduction index and the further vibration reduction index being measured in accordance with the ISO 10848-1:2006 standard.

6. A building according to any one of the preceding claims, **characterized in that** said wooden side wall panels (2a, 2b) are cross laminated timber panels.

7. A building according to any one of the preceding claims, **characterized in that** said acoustically insulating gaps (5) are at least 0.5 cm high, preferably at least 1 cm high and most preferably at least 2 cm high.

8. A building according to any one of the preceding claims, **characterized in that** said vertical resonance frequency of the load bearing elements (10) is below 30 Hz.

9. A building according to any one of the preceding claims, **characterized in that** said load bearing elements (10) have a further vertical resonance frequency which is determined under said permanent load of said part of the building situated above the load bearing elements (10) increased with a utile load which is equal to 1.0 kN/m$^2$ of floor area of the levels present in said part of the building which is situated on top of said load bearing acoustical insulation, which further vertical dilatational resonance frequency is below 30 Hz and preferably below 15 Hz.

10. A building according to any one of the preceding claims, **characterized in that** said load bearing elements (10) have a shear modulus below 204*$d_1$*(PL+MUL/3) and below 408*$d_2$*(PL+MUL), where PL is said permanent load of the part of said building situated above the load bearing elements (10) divided by a total supporting surface area of the load bearing elements (10), MUL is said maximal utile load of 3.0 kN/m$^2$ of floor area of the levels present in said part of the building which is situated on top of said load bearing acoustical insulation divided by a total supporting surface area of the load bearing elements (10), $d_1$ is a height of the load bearing elements (10) under the load of PL+MUL/3, and $d_2$ is a height of the load bearing elements (10) under the load of PL+MUL.

11. A building according to any one of the preceding claims, **characterized in that** said load bearing elements (10) have a Poisson ratio between 0.4 and 0.5.

12. A building according to any one of the preceding claims, **characterized in that** said load bearing elements (10), under said permanent load of said part of the building situated above the load bearing elements (10) increased with the maximum utile load of 3.0 kN/m$^2$ of floor area present in said part of the building which is situated on top of said load bearing acoustical insulation, have a horizontal displacement less than one-third of their initial height and less than one-fifth of their initial width.

13. A building according to any one of the preceding claims, **characterized in that** it comprises connection systems (4) that fix the second panels (2b) to the first panels (2a), which connection systems (4) comprise first connection elements (8) rigidly fixed to the first wall panels (2a) and second connection elements (9) rigidly fixed to the second wall panels (2b), the first and second connection elements (8, 9) being connected by at least one fixation component (7) which assures a force resistant connection against horizontal forces on the first or second panels (2a, 2b).

14. A building according to claim 13, **characterized in that** the at least one fixation component (7) comprises a bolt (13) that engage the first or the second connection element (8, 9) through the intermediary of an elastic material (15) which is applied around the bolt (13), the elastic material being in particular in the form of a washer.

15. A building according to any one of the preceding claims, **characterized in that** said load bearing zones (6) have a length that is smaller than 0.5 m and preferably smaller than 0.4 m.

*F i g . 1*

*Fig. 2*

Fig. 3

*Fig. 4a*

*Fig. 4b*

**Fig. 4c**

**Fig. 4d**

*Fig. 5*

**Fig. 6**

**Fig. 7**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/59228 A1 (VETENSKAPSSTADEN [SE]; MOELLER TORE [SE]; JAKOBSSON OLLE [SE]; HIDEMAR) 16 August 2001 (2001-08-16) * page 5, line 27 - page 12, line 11; figures 1-6 * | 1-15 | INV. E04B1/10 E04B1/82 ADD. F16B5/02 |
| A | DE 20 2014 100979 U1 (BSW BERLEBURGER SCHAUMSTOFFWERK GMBH [DE]) 27 March 2014 (2014-03-27) * the whole document * | 1,13,14 | |

TECHNICAL FIELDS
SEARCHED     (IPC)

E04B
F16B

The present search report has been drawn up for all claims

| Place of search | Date of completion of the search | Examiner |
|---|---|---|
| The Hague | 23 June 2017 | Galanti, Flavio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 16 20 6820

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2017

| Patent document cited in search report | Publication date | Patent family member(s) | | Publication date |
|---|---|---|---|---|
| WO 0159228 A1 | 16-08-2001 | AU | 3256901 A | 20-08-2001 |
| | | EP | 1254291 A1 | 06-11-2002 |
| | | NO | 20023754 A | 08-08-2002 |
| | | WO | 0159228 A1 | 16-08-2001 |
| DE 202014100979 U1 | 27-03-2014 | DE 202014100979 U1 | | 27-03-2014 |
| | | DE 202014105503 U1 | | 12-12-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2687651 A
- US 20150198188 A